# FASCICULE DE BREVET EUROPEEN

(11) **EP 2 168 023 B1**
(45) Date de publication et mention de la délivrance du brevet: **23.05.2012**
(21) Numéro de dépôt: 08826471.8
(22) Date de dépôt: 10.07.2008
(51) Int. Cl.: G05D 11/00

(54) **DISPOSITIF DESTINE A L'INJECTION D'UN ADDITIF DANS UNE CANALISATION**
VORRICHTUNG ZUR EINSPRITZUNG EINES ADDITIVS IN EIN ROHR
DEVICE FOR INJECTING AN ADDITIVE INTO A PIPE

(30) Priorité: 11.07.2007 FR 0756422
(43) Date de publication de la demande: 31.03.2010
(73) Titulaire: Issartel, Eric, 93600 Aulnay sous Bois (FR)
(72) Inventeur: Issartel, Eric, 93600 Aulnay sous Bois (FR)
(74) Mandataire: Tanty, François
(86) Numéro de dépôt international: PCT/FR2008/051288
(87) Numéro de publication internationale: WO 2009/010696

(56) Documents cités:
- WO-A-98/45034
- FR-A- 1 590 546
- FR-A- 2 002 272
- US-A- 5 009 244

## Description

La présente invention concerne un procédé et un dispositif destinés à l'injection d'un additif dans une canalisation traversée par un liquide dont le débit est variable, notamment pour réguler la concentration d'un émulseur dans un courant d'eau alimentant un réseau d'asperseurs. FR 2002272 divulgue un dispositif d'injection d'un additif de l'état de l'art.

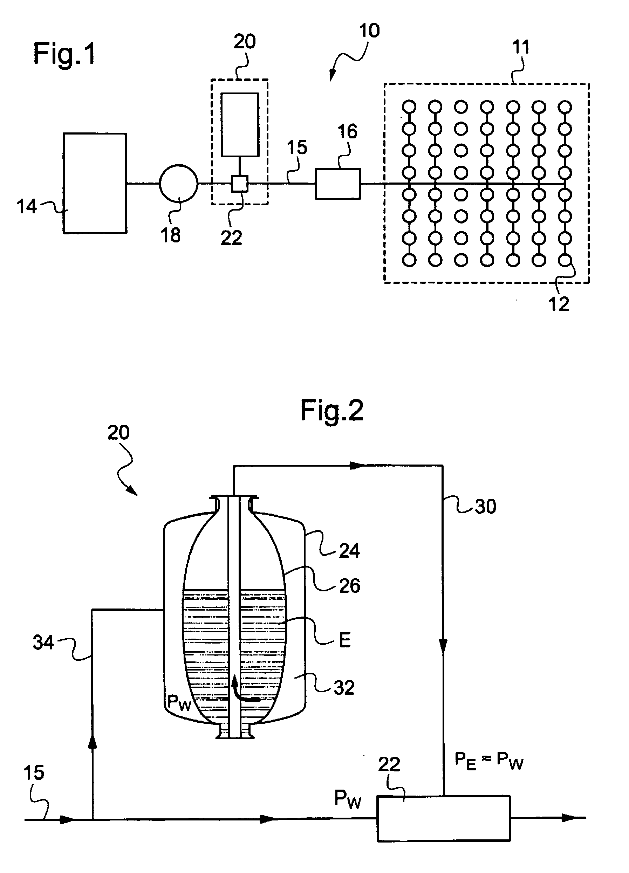

Les réseaux d'asperseurs, ou « réseaux de sprinklers », sont classiquement utilisés dans le cadre de la protection incendie des bâtiments. Un tel réseau 10, comme représenté sur la figure 1, comporte classiquement un ensemble 11 d'asperseurs 12 en communication de fluide avec une réserve d'eau 14, par l'intermédiaire d'une canalisation 15, dans laquelle sont insérés un poste de contrôle 16 et une pompe d'alimentation 18. Un asperseur 12 est classiquement obturé par un élément fusible, par exemple une ampoule de verre, qui fond lorsque la température ambiante est anormalement élevée, par exemple comprise entre 68 et 500 °C. Le poste de contrôle 16 détecte toute dépressurisation résultant de la rupture d'un ou plusieurs fusibles d'asperseur et, en conséquence, établit la communication avec la réserve d'eau 14 et enclenche la pompe 18.

Il en résulte une pulvérisation d'eau dans la pièce où l'asperseur déclenché est installé.

La canalisation 15 et la réserve d'eau 14 sont adaptées de manière à assurer un approvisionnement en eau de l'ensemble 11 d'asperseurs avec un débit et une pression variables en fonction du nombre d'asperseurs déclenchés, le débit restant généralement sensiblement proportionnel à la racine carrée de la pression.

Par exemple, la pression d'alimentation est classiquement comprise entre 3 et 10 bars et le débit compris entre 400 et 2 400 l/min, selon le nombre d'asperseurs déclenchés, lorsque la canalisation présente un diamètre de 100 mm.

Classiquement toujours, un émulseur est injecté dans l'eau pulvérisée au moyen d'une unité de stockage et de dosage (USD) 20 par l'intermédiaire d'un système d'injection 22, ou « proportionneur », inséré sur la canalisation 15 en amont du poste de contrôle 16.

Comme représenté sur la figure 2, l'unité de stockage et de dosage 20 comporte classiquement un réservoir métallique 24 dans lequel est disposée une poche souple 26 contenant un additif, par exemple un émulseur E. La poche souple 26 est en communication de fluide avec le système d'injection 22 par l'intermédiaire d'un conduit d'additif 30. L'espace 32 entre la poche souple 26 et le réservoir 24 est en communication de fluide avec la canalisation 15 par l'intermédiaire d'un conduit de pressurisation 34. L'espace 32 est ainsi rempli d'eau, sensiblement à la pression P_{w} de l'eau dans la canalisation 15 en amont du système d'injection 22. La pression P_{E} dans le conduit d'additif 30 en amont du système d'injection 22 est ainsi sensiblement égale à la pression P_{w}.

Le système d'injection 22, généralement à effet Venturi, permet une injection d'émulseur E d'autant plus grande que le débit d'eau qui le traverse est élevé. Ainsi, au fur et à mesure que le débit d'eau augmente du fait d'une augmentation du nombre d'asperseurs déclenchés, la quantité d'émulseur injecté augmente. La concentration d'émulseur dans l'eau pulvérisée par les asperseurs est donc sensiblement constante.

La poche souple 26 peut cependant se percer, notamment par vieillissement ou frottement sur des bavures de soudure ou sur des évents du réservoir 24, en particulier sous l'effet de coups de bélier. Ce problème est d'autant plus grave qu'une fuite n'est pas facilement détectable et affecte le fonctionnement de l'unité 20.

De plus, la poche 26 doit être reconditionnée après utilisation, ce qui implique l'intervention d'un spécialiste et un maintien hors service de longue durée.

Il existe donc un besoin pour un procédé et un dispositif permettant de résoudre un ou plusieurs des problèmes susmentionnés.

Le but de l'invention est de satisfaire ce besoin.

Selon l'invention, on atteint ce but au moyen d'un dispositif de stockage et de dosage destiné à l'injection d'un additif dans une canalisation traversée par un liquide dont le débit est variable, le dispositif comportant
- un réservoir destiné à contenir dudit additif et pourvu d'une sortie d'additif destinée à être connectée à ladite canalisation, éventuellement par l'intermédiaire d'un système d'injection, et
- un régulateur de pression différentielle comportant une entrée de fluide de pressurisation destinée à être connectée à une source dudit fluide de pressurisation, une sortie de fluide de pressurisation connectée à une entrée de pressurisation du réservoir de manière à pouvoir pressuriser ledit réservoir à une pression de pressurisation, et une entrée de pilotage destinée à être connectée à ladite canalisation.

Ainsi, la pression de l'additif injecté, par exemple un émulseur, n'est plus obtenue par la pression du liquide circulant dans la canalisation, par exemple de l'eau, sur une poche souple contenant cet additif, mais par la pression d'un fluide de pressurisation pressurisant un réservoir contenant ledit additif. Avantageusement, la poche souple des unités de stockage et de dosage selon la technique antérieure peut donc être supprimée. La fiabilité est ainsi augmentée et la maintenance simplifiée.

Après connexion sur la canalisation, de préférence en amont du point d'injection de l'additif, la pression à l'entrée de pilotage, ou « pression de pilotage », est sensiblement égale à la pression du liquide au point de connexion. De préférence, le régulateur est conformé de manière à ce que la pression de pressurisation soit sensiblement égale à la pression de pilotage. La pression de l'additif en amont du point d'injection, sensiblement égale à la pression de pressurisation, est donc sensiblement égale à la pression du liquide en amont du point d'injection, ce qui permet au débit d'injection d'additif d'évoluer avec le débit de liquide dans la canalisation, de préférence de manière à rester sensiblement proportionnel à ce dernier débit.

Dans un mode de réalisation plus général, le régulateur est conformé de manière que la pression de pressurisation soit sensiblement égale à une pression de consigne égale à la pression de pilotage modifiée par une pression de décalage. De préférence, le régulateur est conformé pour autoriser un réglage, par exemple manuel, de la pression de décalage à une valeur de préférence constante dans le temps. Avantageusement, il est ainsi possible de tenir compte de la nature, et en particulier de la viscosité, de l'additif. Cette adaptation est avantageusement rapide et indépendante du système d'injection utilisé au point d'injection.

De préférence toujours, le régulateur comporte des moyens pour réguler la pression de pressurisation de manière à faire tendre vers zéro la différence entre la pression de pilotage ou la pression de consigne et une pression de l'additif mesurée en amont du point d'injection dans la canalisation, en particulier dans un conduit d'additif connectant la sortie d'additif du réservoir et ladite canalisation, de préférence à proximité immédiate du point d'injection. A cet effet, le régulateur peut comporter une entrée de retour connectée au conduit d'additif à proximité du point d'injection et des moyens de comparaison aptes à évaluer la différence entre la pression de pilotage ou la pression de consigne et la pression à l'entrée de retour, le régulateur modifiant la pression de pressurisation de manière à faire tendre cette différence vers zéro.

De préférence encore, le régulateur est un régulateur mécanique, ne faisant intervenir aucun organe électrique ou électronique. La fiabilité du dispositif en est encore améliorée.

L'utilisation d'un régulateur comportant un micro contrôleur est cependant également envisagée.

De préférence, le dispositif de stockage et de dosage selon l'invention comporte, au point d'injection dans la canalisation, un système d'injection. Le système d'injection peut être connecté à ladite sortie du réservoir par l'intermédiaire d'un conduit d'additif et être inséré dans la canalisation de manière à y injecter dudit additif. Ce système d'injection peut notamment être un proportionneur automatique, c'est-à-dire purement mécanique. Le système d'injection peut en particulier comporter des moyens pour accélérer les flux d'additif et de liquide le traversant. Par exemple, il peut comporter des premier et deuxième diaphragmes réduisant les sections de passage dudit liquide et dudit additif, respectivement.

Dans un mode de réalisation, le système d'injection est conformé de manière à ce que, lorsque les pressions dudit liquide et dudit additif en amont dudit système d'injection sont sensiblement égales, le débit d'additif injecté est sensiblement proportionnel au débit de liquide dans ladite canalisation.

Le dispositif de stockage et de dosage selon l'invention peut encore comporter une vanne d'isolement permettant sélectivement de couper ou d'établir la communication entre l'entrée de fluide de pressurisation du régulateur et la source de fluide de pressurisation.

De préférence, la vanne d'isolement est commandée, par exemple en fonction d'un débit ou d'une pression, pour s'ouvrir en cas de circulation de liquide dans la canalisation ou en cas de variation d'une pression du liquide dans cette canalisation.

Dans une application à un réseau d'asperseurs, la vanne d'isolement peut être commandée de manière à s'ouvrir en cas de détection, par exemple par un poste de contrôle, d'une dépression ou d'une circulation d'eau dans le réseau correspondant au déclenchement d'un asperseur. En dehors des phases d'injection de l'additif, le régulateur et le réservoir peuvent ainsi ne pas être maintenus sous pression, ce qui avantageusement limite les risques de fuite et les coûts de maintenance.

De préférence encore, le dispositif de stockage et de dosage selon l'invention comporte une soupape intégrée dans la partie supérieure de la paroi du réservoir, ladite soupape étant ouverte lorsque la pression de gaz P_{G} à l'intérieur du réservoir dépasse une pression d'ouverture Pₒ égale à la somme de la pression de liquide P_{W} dans la canalisation et d'un différentiel de pression ΔP et fermée lorsque la pression de gaz P_{G} dans le réservoir est inférieure à la pression d'ouverture Pₒ.

Avantageusement, cette soupape permet une adaptation rapide du débit d'injection de l'additif en cas de diminution brutale de la pression du liquide P_{W}. Une telle diminution de la pression du liquide dans la canalisation ne conduit donc pas à une augmentation durable de la concentration d'additif dans le liquide en aval du point d'injection.

L'additif contenu dans le réservoir peut être notamment choisi dans le groupe formé par un émulseur, un produit de traitement d'eaux usées, un produit de traitement d'eau de piscine, et un produit phytosanitaire.

L'invention concerne également un dispositif d'alimentation en un liquide contenant un additif, ce dispositif comportant :
- une canalisation connectée à une source dudit liquide et
- un dispositif de stockage et de dosage selon l'invention comportant un système d'injection inséré dans ladite canalisation, et dont l'entrée de pilotage du régulateur est connectée à ladite canalisation, de préférence en amont du système d'injection, de préférence encore à proximité de ce dernier.

Ce dispositif d'alimentation peut comporter une source de fluide de pressurisation sous pression connectée à l'entrée de fluide de pressurisation du régulateur, le fluide de pressurisation étant un fluide gazeux ou non gazeux. La source de fluide de pressurisation peut, par exemple, être choisie parmi un réseau de gaz comprimé, une bouteille sous pression ou un compresseur. Le gaz peut être en particulier de l'azote.

La canalisation peut être une canalisation d'un système de protection et de lutte contre les incendies, en particulier d'un système alimentant au moins un asperseur, une canalisation d'une installation de traitement d'eaux usées ou d'eau de piscine ou une conduite d'un pulvérisateur agricole.

Dans un mode de réalisation, le dispositif de stockage et de dosage, ou le dispositif d'alimentation, selon l'invention présente un encombrement et un poids autorisant son embarquement à bord d'un véhicule automobile, aérien ou flottant, par exemple une voiture ou un camion, ou est transportable par une personne, par exemple sur le dos ou à la main. Notamment pour les cas où le dispositif de stockage et de dosage, ou dispositif d'alimentation, est destiné à être embarqué ou à être porté par une personne, le réservoir d'additif et/ou la source de liquide peut être un réservoir d'une capacité inférieure à 50 litres, voire inférieure à 20 litres. La source de liquide peut aussi être constituée par un réseau d'alimentation, par exemple le réseau d'eau public.

L'invention concerne encore un procédé de régulation de la concentration d'un additif dans un liquide circulant dans une canalisation avec un débit variable (dans le temps), ce procédé comportant une injection, en un point d'injection sur ladite canalisation, dudit additif avec un débit variable en fonction de la différence des pressions du liquide et de l'additif en amont du point d'injection. Selon l'invention, on modifie ladite pression de l'additif en modifiant la pression d'un fluide de pressurisation d'un réservoir contenant dudit additif et en communication de fluide avec ledit point d'injection.

La pression du fluide de pressurisation, ou « pression de pressurisation », peut être déterminée en fonction :
- d'une pression dudit liquide dans la canalisation, notamment en amont dudit point d'injection, et/ou
- d'une pression de décalage, ou « offset », de préférence réglable, et/ou
- d'une pression de l'additif en amont du point d'injection, de préférence immédiatement en amont du point d'injection.

Dans un mode de réalisation particulier, on peut modifier la pression de pressurisation en fonction d'une différence entre la pression de l'additif en amont du point d'injection et la pression du liquide dans la canalisation en amont du point d'injection, éventuellement modifiée par la pression de décalage, de manière à faire tendre cette différence vers zéro. Avantageusement, cette caractéristique permet notamment de compenser une variation de la pression de l'additif entre le réservoir et le point d'injection.

L'invention concerne enfin un procédé de rénovation d'une unité de stockage et de dosage destinée à l'injection d'un additif dans une canalisation traversée par un liquide, l'unité comportant :
- un réservoir dont une entrée peut être mise en communication de fluide avec ladite canalisation,
- une poche souple destinée à contenir dudit additif, disposée à l'intérieur du réservoir de manière à subir une pression exercée par dudit liquide lorsque ladite entrée du réservoir communique avec ladite canalisation, et dont une sortie peut être mise en communication de fluide avec ladite canalisation, en particulier par l'intermédiaire d'un système d'injection inséré dans ladite canalisation.

Selon l'invention, ce procédé comporte les étapes suivantes :
a) désolidarisation et extraction de la poche hors du réservoir,
b) modification des entrée(s) et sortie(s) du réservoir et installation d'un régulateur de pression différentielle, et éventuellement d'une source de pression, de manière à constituer un dispositif de stockage et de dosage selon l'invention ou un dispositif d'alimentation selon l'invention.

Avantageusement, ce procédé permet de réutiliser une partie des pièces et des connexions d'un dispositif de dosage et d'injection ou d'un dispositif d'alimentation selon la technique antérieure, notamment du type de celui décrit en introduction.

Dans un mode de réalisation, à l'étape b), l'entrée de fluide de pressurisation du régulateur de pression différentielle est connectée à une source de fluide de pressurisation, et la sortie de fluide de pressurisation de ce régulateur est connectée à une entrée du réservoir, de préférence en partie supérieure du réservoir.

Le cas échéant, une entrée de retour du régulateur est connectée au conduit d'additif, de préférence à proximité du système d'injection.

Enfin, l'entrée de pilotage du régulateur est connectée à la canalisation, de préférence en amont du point d'injection. Les autres orifices mettant en communication le réservoir avec l'extérieur sont obturés, au moins provisoirement. Après l'étape b), le réservoir est rempli, au moins partiellement, avec de l'additif. Le régulateur est alors capable de modifier la pression de pressurisation du réservoir en fonction d'une pression de pilotage correspondant sensiblement à la pression du liquide dans la canalisation.

Le cas échéant, le procédé de rénovation comporte une étape de réglage d'une pression de décalage du régulateur, par exemple en fonction de la nature de l'additif, et notamment de sa viscosité, cette pression de décalage, positive ou négative, s'ajoutant à la pression de pilotage pour modifier la pression de consigne du régulateur.

Dans le dispositif de stockage et de dosage selon l'invention, comme dans le procédé de régulation selon l'invention, le fluide de pressurisation peut être un fluide gazeux ou un fluide non gazeux, de préférence non miscible avec l'additif. Avantageusement, la pressurisation du réservoir avec un fluide non gazeux, c'est-à-dire incompressible, ne conduit pas à une augmentation sensible de l'énergie interne du dispositif selon l'invention. L'utilisation de fluides de pressurisation non compressibles permet également, avantageusement, de limiter les contrôles techniques réglementaires, et en particulier, d'éviter les tests d'épreuve auxquels sont soumis les récipients pressurisés avec un gaz. Si l'additif est aqueux, le fluide de pressurisation peut avantageusement être hydrophobe. De la silicone ou une solution fluorée sont, par exemple, envisageables.

D'autres caractéristiques et avantages de l'invention apparaîtront à la lecture de la description détaillée qui va suivre et à l'examen du dessin annexé dans lequel :
- la figure 1 est une représentation schématique d'un réseau d'asperseurs conventionnel,
- la figure 2 représente une unité de stockage et de dosage selon la technique antérieure,
- la figure 3 représente schématiquement un dispositif de stockage et de dosage selon l'invention,
- la figure 4 représente schématiquement, en coupe transversale, un système d'injection pouvant être utilisé dans un dispositif de stockage et de dosage selon l'invention, et
- la figure 5 représente l'évolution de la concentration en additif en fonction du débit de liquide, en aval du point d'injection, la pression dans la canalisation, en amont du point d'injection étant de 6 bars et l'additif étant injecté au moyen d'un dispositif de stockage et de dosage selon l'invention.

Dans la description qui va suivre, des références identiques sont utilisées pour désigner des organes identiques ou analogues.

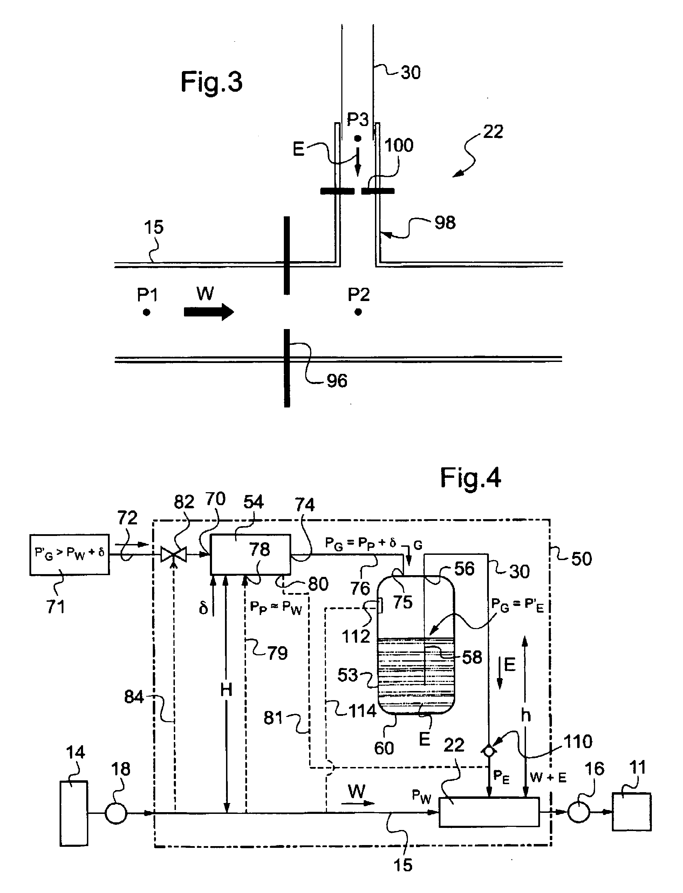

Sur la figure 3, les conduits 79 et 81, 84 et 114 sont représentés en pointillés car ils servent à la commande du régulateur 54, de la vanne d'isolement 82 et de la soupape 112, respectivement.

Les figures 1 et 2 ayant été décrites en introduction, on se reporte à la figure 3. Cette figure représente un dispositif de stockage et de dosage 50 selon l'invention destiné à alimenter en eau chargée en émulseur un ensemble d'asperseurs. Comme les unités de stockage et de dosage selon la technique antérieure, le dispositif 50 selon l'invention est inséré dans une canalisation d'eau 15 connectée en amont, par l'intermédiaire d'une pompe 18, à une source de liquide 14, par exemple à un réservoir d'eau, et en aval à un ensemble 11 d'asperseurs, par l'intermédiaire d'un poste de contrôle 16.

Le dispositif 50 comporte un réservoir 53 contenant de l'émulseur E, un régulateur de pression différentielle 54 et un système d'injection 22 destiné à l'injection, dans la canalisation 15, d'émulseur E provenant du réservoir 53.

Le réservoir 53 peut être identique au réservoir 24 des unités de stockage et de dosage selon la technique antérieure (figure 2). De préférence, il présente une capacité comprise entre 200 et 12 000 litres, notamment dans une application à un réseau d'asperseurs.

Une sortie d'additif 56 du réservoir 53 est connectée au système d'injection 22 par l'intermédiaire d'un conduit d'additif 30. Le conduit d'additif 30 se prolonge dans le réservoir 53 par un tube plongeur 58 s'étendant sensiblement jusqu'au fond 60 du réservoir de manière à pouvoir extraire l'émulseur E contenu dans la partie inférieure du réservoir 53.

Le régulateur de pression différentielle 54 est connecté
- par une entrée de fluide de pressurisation, en l'occurrence une entrée de gaz 70, à une source de fluide de pressurisation, en l'occurrence une source de gaz 71, par exemple un réseau d'air comprimé ou des bouteilles sous pression, par l'intermédiaire d'un conduit d'alimentation en gaz 72 ;
- par une sortie de fluide de pressurisation, en l'occurrence une sortie de gaz 74, à une entrée de pressurisation 75 ménagée dans la partie supérieure du réservoir 53, par l'intermédiaire d'un conduit de pressurisation 76 ;
- par une entrée de pilotage 78 à la canalisation d'eau 15, par l'intermédiaire d'un conduit de pilotage 79.

La nature du gaz sous pression fourni par la source de gaz 71 n'est pas limitative. En particulier, ce gaz peut être du gaz carbonique, de l'azote ou de l'air comprimé. De préférence, le gaz est choisi pour ne pas être soluble dans l'eau. L'azote est le gaz préféré entre tous.

Dans un mode de réalisation, le régulateur 54 est conformé de manière à asservir la pression de pressurisation P_{G} du gaz G en sortie de gaz 74 à la pression de pilotage Pₚ à l'entrée de pilotage 78, la pression de pilotage Pₚ étant sensiblement égale à la pression P_{w} de l'eau circulant dans la canalisation 15. La pression P'_{G} dans la source de gaz 71 doit donc être supérieure à la pression P_{w} dans la canalisation 15.

Dans un autre mode de réalisation plus général, la pression P_{G} à la sortie de gaz 74 est égale à une pression de consigne P_{C} égale à la somme de la pression de pilotage Pₚ et d'un différentiel constant dans le temps, ou « pression de décalage » δ, en anglais « offset », de préférence modifiable manuellement, positif ou négatif. Avantageusement, le dispositif de stockage et de dosage selon l'invention peut alors s'adapter facilement à un changement de viscosité de l'additif, par simple réglage de la pression de décalage δ. La pression P'_{G} dans la source de gaz 71 doit alors être supérieure à la pression de consigne P_{C}.

De préférence, le régulateur 54 comporte une entrée de retour 80, connectée, par l'intermédiaire d'un conduit de retour 81, au conduit d'additif 30, de préférence à proximité du système d'injection 22, et des moyens permettant de réguler la pression de pressurisation de manière à faire tendre vers zéro la différence entre la pression à l'entrée de retour 80 et la pression de pilotage ou la pression de consigne.

De préférence, le régulateur 54 fonctionne sans apport extérieur d'énergie. Dans le mode de réalisation représenté, une vanne d'isolement 82 est insérée dans le conduit d'alimentation en gaz 72. La vanne d'isolement 82 est commandée par la pression d'eau P_{w} dans la canalisation 15. A cet effet, elle présente une entrée connectée, par l'intermédiaire d'un conduit de commande 84, à la canalisation d'eau 15. En variante, la vanne d'isolement 82 peut être à ouverture manuelle ou être pilotée par un asservissement électronique ou pyrotechnique. De préférence, elle s'ouvre automatiquement en cas de chute de pression dans la canalisation 15 ou en cas de circulation d'eau dans cette dernière. De préférence encore, elle est conformée pour se refermer automatiquement lorsqu'aucune de ces deux conditions n'est remplie. Avantageusement, une fuite en aval de la vanne 82 ne conduit donc pas à une vidange de la source de gaz 71.

Le système d'injection 22 peut être un système d'injection classique à effet venturi. Il permet alors, sans apport extérieur d'énergie, une injection d'émulseur E dans la canalisation 15 avec un débit fonction de la pression P_{E} de l'émulseur dans le conduit d'additif 30. Le système d'injection 22 peut en particulier être conforme pour assurer un débit d'injection d'émulseur sensiblement proportionnel à la racine carré de la pression P_{E}. La constante de proportionnalité dépend notamment du diamètre de la canalisation, des pertes de charge, etc.

La figure 3 représente, en coupe longitudinale schématique, un exemple de système d'injection 22. Ce dispositif comporte un diaphragme « eau » 96 obturant partiellement la canalisation 15 en s'opposant à la circulation de l'eau (flèche W). En aval de ce diaphragme, le système d'injection comporte un piquage 98 destiné à l'injection d'émulseur (flèche E) dans le flux d'eau. Ce piquage comporte lui-même un diaphragme « émulseur » 100 et est connecté à la sortie d'additif 56 du réservoir 53 par le conduit d'additif 30. Les diaphragmes « eau » et « émulseur » sont destinés à accélérer les courants d'eau et d'émulseur, de manière à ce que la pression en aval de ces diaphragmes (point P2) soit inférieure aux pressions d'eau (point P1) et d'émulseur (point P3) en amont des diaphragmes « eau » et « émulseur », respectivement. En théorie, un tel dispositif permet d'obtenir une concentration d'émulseur dans le courant d'eau sensiblement constante en aval du piquage 98 pourvu que la pression de l'émulseur P_{E} au point P3 reste sensiblement identique à la pression d'eau P_{w} au point P1. Une calibration de l'ouverture des diaphragmes, et notamment du diaphragme « émulseur », permet d'adapter la concentration de l'émulseur dans l'eau de manière à obtenir, dans une application à un réseau d'asperseurs, une concentration généralement comprise entre 3 et 6 % en volume, pourvu que le débit d'eau évolue dans une plage limitée.

De préférence, le dispositif selon l'invention comporte encore un clapet anti-retour 110 empêchant un retour de l'eau circulant dans la canalisation 15 vers le réservoir 53 d'émulseur.

De préférence, le dispositif selon l'invention comporte également une soupape 112 insérée dans la paroi du réservoir 53 à un niveau lui permettant de rester en contact avec le gaz à l'intérieur du réservoir 53. La soupape 112 est connectée, par l'intermédiaire d'un conduit de pilotage 114, à la canalisation 15. La soupape 112 est configurée de manière à être fermée ou ouverte selon que la pression P_{G} du gaz à l'intérieur du réservoir 53 est inférieure ou supérieure, respectivement, à une pression d'ouverture Pₒ égale à la somme de la pression P_{W} du liquide dans la canalisation 15 et d'un différentiel de pression ΔP défini par l'utilisateur, par exemple égal à 1 bar.

En cas de diminution brutale de la pression P_{W} dans la canalisation 15, par exemple du fait de la mise en oeuvre d'une lance à incendie, la soupape 112 détecte que la différence entre les pressions P_{G} et P_{W} dépasse l'écart ΔP prédéfini. La soupape s'ouvre alors, ce qui permet un échappement vers l'extérieur de gaz contenu à l'intérieur du réservoir 53. La pression P_{G} à l'intérieur du réservoir diminue ainsi très rapidement, ce qui permet une adaptation presque immédiate de la pression d'émulseur P_{E} et évite donc une injection excessive d'additif dans le liquide de la canalisation 15.

Lorsque la pression de gaz P_{G} à l'intérieur du réservoir 53 atteint la pression d'ouverture Pₒ= P_{W} + ΔP, la soupape se referme et la régulation se poursuit normalement.

La soupape 112 permet ainsi une diminution rapide de la pression P_{G} dans le cas d'une chute brutale de la pression P_{W}. En l'absence d'une telle soupape, la pression P_{G} ne pourrait diminuer que du fait d'une évacuation d'additif par le conduit d'additif 30. La diminution de la pression P_{G} serait donc longue et conduirait à une injection excessive et durable d'additif dans le liquide circulant dans la canalisation 15.

Le fonctionnement du dispositif de stockage et de dosage qui vient d'être décrit est le suivant :
En cas d'incendie, la température à proximité des asperseurs 12 augmente jusqu'à faire fondre un ou plusieurs éléments fusibles. Il en résulte une dépressurisation en aval du poste de contrôle 16. Ce dernier commande alors une mise en communication des asperseurs 12 avec la source d'eau 14 et la mise en marche de la pompe 18. La canalisation 15 est alors mise sous pression, ce qui provoque l'ouverture de la vanne d'isolement 82.

Le régulateur 54 modifie alors la pression de pressurisation P_{G} du réservoir 53 de manière à ce qu'elle soit sensiblement égale à la pression de consigne P_{C}, égale à la somme de la pression de pilotage Pₚ, en l'occurrence sensiblement égale à la pression P_{W} de l'eau dans la canalisation 15, et de la pression de décalage δ. La source de gaz 71 à une pression P'_{G} fournit le gaz nécessaire pour cette mise sous pression.

La pression P'_{E} de l'émulseur E à l'interface avec le gaz G est alors égale à la pression P_{G}. Cette pression pousse l'émulseur E dans le tube plongeur 58, le conduit d'additif 30, le clapet anti-retour 110 et le système d'injection 22. La pression P_{E} de l'émulseur en entrée du système d'injection 22 est alors sensiblement égale à la pression P_{W} de l'eau en entrée de ce dispositif, éventuellement décalée de la pression de décalage δ.

Lorsque la pression P_{W} dans la canalisation 15 évolue, notamment du fait d'une évolution du nombre d'asperseurs déclenchés, le régulateur 54 modifie instantanément en conséquence, sans apport d'énergie extérieur, la pression de pressurisation P_{G} du réservoir 53. La pression de l'émulseur P_{E} en amont du système d'injection 22 reste donc toujours sensiblement égale à la pression P_{W}, éventuellement décalée de la pression de décalage δ, quelle que soit l'évolution de la pression ou du débit d'eau dans la canalisation 15, ce qui garantit une concentration « c » en émulseur sensiblement constante dans le mélange eau + émulseur (W + E) pulvérisé par les asperseurs.

En outre, la pression à l'entrée de retour 80 permet au régulateur de comparer la pression de consigne P_{C} (=P_{P} + δ) et P_{E}, et, en cas de différence non nulle, de modifier en conséquence P_{G} pour diminuer cette différence. La qualité de la régulation en est améliorée. En particulier cette régulation permet de tenir compte du différentiel de pression résultant de la différence de hauteur « h » entre le niveau de l'émulseur dans le réservoir et le diaphragme « émulseur » 100, des pertes de charge entre la sortie du réservoir 53 et le diaphragme « émulseur » 100 et, pour les bas débits notamment, d'un éventuel différentiel de pression inhérent au régulateur, par exemple de 0,1 bar, entre la pression de pressurisation P_{G} en sortie du régulateur et la pression de consigne P_{C}.

Par ailleurs, le réglage de la pression de décalage permet, si nécessaire, de maintenir une différence entre les pressions d'additif et de liquide en amont du système d'injection. Avantageusement, la pression de décalage permet ainsi une adaptation à un nouvel émulseur sans modification du système d'injection, et en particulier sans changement de diaphragme.

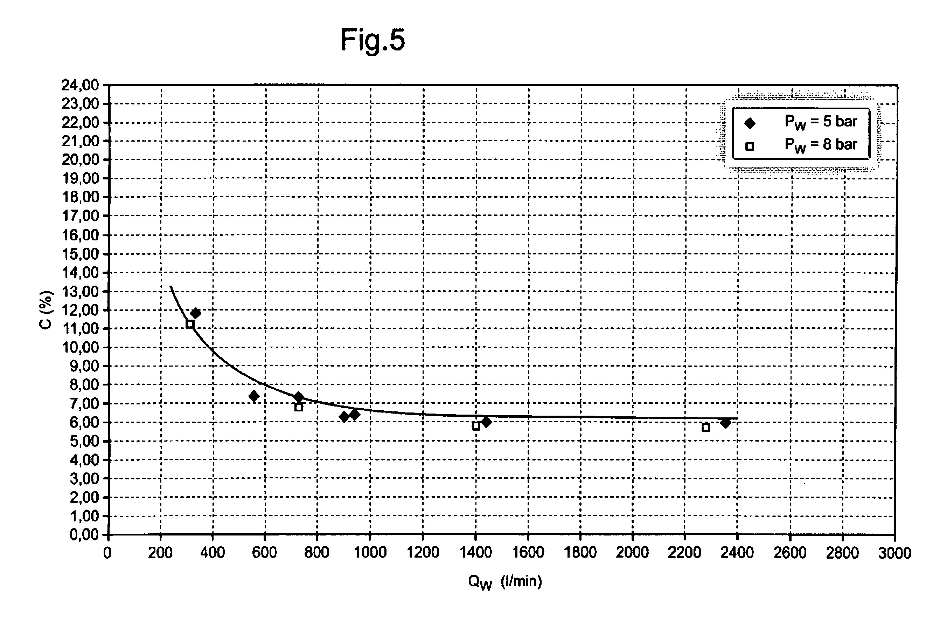

Comme représenté sur la figure 5, le dispositif selon l'invention permet d'obtenir une concentration en émulseur « c » dans l'eau sensiblement constante pour un débit variant de 400 à 2 400 l/min, en particulier dans les conditions de fonctionnement d'un dispositif de protection et de lutte contre les incendies mettant en oeuvre un réseau d'asperseurs.

Comme cela apparaît clairement à présent, l'invention fournit une solution fiable et bon marché. Cette solution présente l'avantage de la simplicité, aucune poche souple ni apport d'énergie extérieur n'étant indispensable. L'absence de poche souple rend également le reconditionnement beaucoup plus simple.

Avantageusement, le dispositif de stockage et de dosage selon l'invention peut être fabriqué par rénovation d'une unité de stockage et de dosage selon la technique antérieure. Pour cela, l'opérateur désolidarise et retire la poche du réservoir. Puis il modifie les entrées et les sorties de ce dernier de manière à ce que le réservoir constitue une enceinte étanche présentant une sortie 56 permettant la sortie d'émulseur contenu dans le réservoir 53 vers le système d'injection 22, et une entrée de gaz 75 ménagée de préférence en partie supérieure du réservoir et permettant une mise sous pression de l'émulseur.

A cet effet, l'opérateur installe un régulateur de pression différentiel dont il connecte une entrée de gaz 70 à une source de gaz 71, une sortie de gaz 74 à l'entrée 75 du réservoir 53 et une entrée de pilotage 78 à la canalisation 15.

Le procédé de rénovation selon l'invention permet ainsi avantageusement de réutiliser le système d'injection de l'unité de stockage et de dosage déjà en place, ainsi que le réservoir qui contenait l'enveloppe souple. Les coûts de fabrication et d'installation en sont sensiblement réduits.

Bien entendu, l'invention n'est pas limitée aux modes de réalisation décrits et représentés.

En particulier, si le dispositif de stockage et de dosage selon l'invention peut être mis en oeuvre dans le cadre d'un dispositif de protection contre l'incendie, l'additif étant notamment un émulseur, il peut également être utilisé dans d'autres applications, et notamment pour le traitement d'eaux usées ou d'eau de piscine, ou dans des applications agricoles, par exemple pour pulvériser des produits phytosanitaires dilués. L'additif est alors un produit de traitement d'eaux usées ou d'eau piscine ou un produit phytosanitaire.

L'expression « comportant un » doit être comprise ici comme étant synonyme de « comportant au moins un », sauf si le contraire est spécifié.

En outre, le tube plongeur est optionnel. Par exemple, la sortie d'additif 56 peut être disposée au fond du réservoir. De préférence, cette sortie est alors équipée d'un clapet, par exemple à bille, permettant d'obturer le conduit d'additif lorsque la totalité de l'émulseur a été consommée. Avantageusement, on évite ainsi toute injection de gaz dans la canalisation.

Le clapet peut par exemple être commandé au moyen d'un flotteur flottant dans le réservoir en surface de l'additif. L'entrée de pilotage pourrait également être connectée en aval du point d'injection de l'additif.

## Revendications

1. Dispositif de stockage et de dosage destiné à l'injection d'un additif (E) dans une canalisation (15) traversée par un liquide dont le débit est variable, le dispositif comportant:
- un réservoir (53) destiné à contenir dudit additif et pourvu d'une sortie d'additif (56) destinée à être connectée à ladite canalisation,
- un régulateur de pression différentielle (54) comportant une entrée de fluide de pressurisation destinée à être connectée à une source dudit fluide de pressurisation, une sortie de fluide de pressurisation (74) connectée à une entrée de pressurisation (75) du réservoir (53) de manière à pouvoir pressuriser ledit réservoir à une pression de pressurisation (P_{G}), **caractérisé en ce que** ledit régulateur de pression différentielle (54) comporte de plus une entrée de pilotage (78) destinée à être connectée à ladite canalisation (15) de manière à pouvoir modifier la pression de pressurisation (P_{G}) dudit réservoir en fonction de la pression du liquide dans la canalisation.

2. Dispositif selon la revendication 1, dans lequel le régulateur (54) est conformé de manière à ce que la pression de pressurisation (P_{G}) soit sensiblement égale à la pression de pilotage (Pₚ) à l'entrée de pilotage (78), ou à une pression de consigne (P_{C}) égale à la pression de pilotage (Pₚ) modifiée par une pression de décalage (δ).

3. Dispositif selon l'une quelconque des revendications précédentes, le régulateur étant un régulateur mécanique ne faisant intervenir aucun organe électrique ou électronique.

4. Dispositif selon l'une quelconque des revendications précédentes, comportant, au point d'injection dans la canalisation (15), un système d'injection (22) comportant des premier (96) et deuxième (100) diaphragmes réduisant des sections de passage dudit liquide et dudit additif, respectivement.

5. Dispositif selon l'une quelconque des revendications 2 à 4, dans lequel le régulateur comporte des moyens pour réguler la pression de pressurisation (P_{G}) de manière à faire tendre vers zéro la différence entre la pression de pilotage ou la pression de consigne et une pression de l'additif mesurée en amont du point d'injection dans la canalisation (15).

6. Dispositif selon l'une quelconque des revendications précédentes, le réservoir (53) contenant un additif choisi dans le groupe formé par un émulseur, un produit de traitement d'eaux usées, un produit de traitement d'eau de piscine et un produit phytosanitaire.

7. Dispositif d'alimentation en un liquide contenant un additif, comportant
- une canalisation (15) connectée à une source (14) dudit liquide, et
- un dispositif de stockage et de dosage selon l'une quelconque des revendications précédentes et comportant un système d'injection (22) inséré dans ladite canalisation, et dont l'entrée de pilotage du régulateur est connectée à ladite canalisation (15).

8. Dispositif selon la revendication précédente, comportant une source de fluide de pressurisation sous pression (71) connectée à l'entrée de fluide de pressurisation (70) dudit régulateur, le fluide de pressurisation étant un fluide gazeux ou incompressible.

9. Dispositif selon la revendication précédente, la source de fluide de pressurisation étant choisie parmi un réseau de gaz comprimé, une bouteille sous pression, un compresseur.

10. Dispositif selon l'une quelconque des revendications 7 à 9, la canalisation étant une canalisation d'un système de protection et de lutte contre les incendies comportant au moins un asperseur (12).

11. Dispositif selon l'une quelconque des revendications précédentes 7 à 10, l'entrée de pilotage étant connectée en amont du point d'injection de l'additif dans la canalisation (15).

12. Procédé de régulation de la concentration d'un additif (E) dans un liquide circulant dans une canalisation (15), avec un débit variable, ce procédé comportant une injection, en un point d'injection sur ladite canalisation, dudit additif avec un débit variable en fonction de la différence des pressions du liquide (P_{W}) et de l'additif (P_{E}) en amont du point d'injection, **caractérisé en ce qu'**on modifie ladite pression de l'additif en modifiant la pression (P_{G}) d'un fluide de pressurisation d'un réservoir (53) contenant dudit additif (E) et en communication de fluide avec ledit point d'injection (22).

13. Procédé selon la revendication précédente, la pression du fluide de pressurisation, dite « pression de pressurisation », étant déterminée en fonction
- d'une pression dudit liquide dans la canalisation, et/ou
- d'une pression de décalage, et/ou
- d'une pression de l'additif en amont du point d'injection.

14. Procédé de rénovation d'une unité de stockage et de dosage destinée à l'injection d'un additif dans une canalisation (15) traversée par un liquide, l'unité comportant
- un réservoir (24) dont une entrée peut être mise en communication de fluide avec ladite canalisation,
- une poche souple (26) destinée à contenir dudit additif, disposée à l'intérieur du réservoir de manière à subir une pression exercée par dudit liquide lorsque ladite entrée du réservoir communique avec ladite canalisation, et dont une sortie peut être mise en communication de fluide avec ladite canalisation, en particulier par l'intermédiaire d'un système d'injection (22) inséré dans ladite canalisation,
le procédé comportant les étapes suivantes :
a) désolidarisation et extraction de la poche (26) hors du réservoir (24),
b) modification des entrée(s) et sortie(s) du réservoir et installation d'un régulateur de pression différentielle, et éventuellement d'une source de pression, de manière à constituer un dispositif de stockage et de dosage selon l'une quelconque des revendications 1 à 6 ou un dispositif d'alimentation selon l'une quelconque des revendications 7 à 13.

## Claims

1. A storage and metering device for injecting an additive (E) into a pipe (15) through which a variable-flow-rate liquid flows, the device comprising:
- a container (53) for containing said additive and with an additive outlet (56) for connection to said pipe,
- a differential pressure controller (54) comprising a pressurization fluid inlet to be connected to a source of said pressurization fluid, a pressurization fluid outlet (74) connected to a pressurization inlet (75) of the container (53) so that said container can be pressurized to a pressurization pressure (P_{G}), **characterized in that** said differential pressure controller (54) further comprises a control inlet (78) to be connected to said pipe (15) in order to be able to the pressurization pressure (P_{G}) of said container according to the liquid pressure in the pipe.

2. The device as claimed in claim 1, in which the controller (54) is arranged so the pressurization pressure (P_{G}) is substantially equal to the control pressure (Pₚ) at the control inlet (78), or to a pressure setpoint (P_{C}) equal to the control pressure (Pₚ) modified by an offset pressure (δ).

3. The device as claimed in any one of the preceding claims, the controller being a mechanical controller not involving any electrical or electronic member.

4. The device as claimed in any one of the preceding claims, comprising, at the injection point of the pipe (15), an injection system (22) comprising first (96) and second (100) diaphragms reducing the flow passages of said liquid and of said additive, respectively.

5. The device as claimed in any one of claims 2 to 4, in the controller comprises means for controlling the pressurization pressure (P_{G}) in order to minimize the difference the control pressure or the pressure setpoint and a pressure of the additive measured upstream of the injection point in the pipe (15).

6. The device as claimed in any one of the preceding claims, the container (53) containing an additive selected from the group formed by an emulsifier, a wastewater treatment product, a pool water treatment product and a phytosanitary product.

7. The device for feeding a liquid containing an additive, comprising
- a pipe (15) connected to a source (14) of said liquid, and
- a storage and metering device as claimed in any one of the preceding claims and comprising an injection system (22) inserted into said pipe, and whereof the control inlet of the controller is connected to said pipe (15).

8. The device as claimed in the preceding claim, comprising a source of pressurized pressurization fluid (71) connected to the pressurization fluid inlet (70) of said controller, the pressurization fluid being a gaseous or incompressible fluid.

9. The device as claimed in the preceding claim, the pressurization fluid source being selected from a compressed gas network, a pressurized cylinder, a compressor.

10. The device as claimed in any one of claims 7 to 9, the pipe being a pipe of a fire protection and fighting system comprising at least one sprinkler (12).

11. The device as claimed in any one of the preceding claims 7 to 10, the control inlet being connected upstream of the additive injection point in the pipe (15).

12. A method for controlling the concentration of an additive (E) in a liquid flowing in a pipe (15) at a variable flow rate, said method comprising an injection at an injection point on said pipe, of said additive at a variable flow rate according to the difference in pressures of the liquid (P_{W}) and of the additive (P_{E}) of the injection point, **characterized in that** said additive pressure is modified by the pressure (P_{G}) of a pressurization fluid of a container (53) containing said additive (E) and communicating fluidly with said injection point (22).

13. The method as claimed in the preceding claim, the pressurization fluid pressure, called pressurization pressure, being determined according to
- a pressure of said liquid in the pipe, and/or
- an offset pressure, and/or
- an additive pressure upstream of the injection point.

14. A method for renovating a storage and metering unit for injecting an additive into a pipe (15) through which a liquid flows, the unit comprising
- a container (24) of which an inlet can be made to communicate fluidly with said pipe,
- a flexible bag (26) for containing said additive, placed the tank so as to undergo the pressure exerted by said liquid when said container inlet communicates with said pipe, and whereof an outlet can be made to communicate fluidly with said pipe, in particular by means of an injection system (22) inserted into said pipe,
the method comprising the steps:
a) detaching and extracting the bag (26) from the container (24),
b) modifying the container inlet(s) and outlet(s) and installing a differential pressure controller, and optionally a pressure source, in order to constitute a storage and metering device as claimed in any one of claims 1 to 6 or a feel device as claimed in any one of claims 7 to 13.

## Patentansprüche

1. Vorrichtung zur Bevorratung und Dosierung, die für die Injektion eines Additivs (E) Leitung (15) bestimmt ist die von einer Flüssigkeit mit variablem Durchsatz durchströmt wird, welche Vorrichtung aufweist:
- einen Behälter (53), der dazu bestimmt ist, dass genannte Additiv aufzunehmen, und der einen Auslass (56) für das Additiv aufweist, der dazu bestimmt ist, mit der genannten Leitung verbunden zu werden,
- einen differentiellen Druckregler (54), der einen Einlass für ein Druckausgleichsfluid, der dazu bestimmt ist, mit einer Quelle für das genannte Druckausgleichsfluid verbunden zu werden, und einen Auslass (74) für das Druckausgleichsfluid aufweist, der mit einem Druckausgleichseinlass (75) des Behälters (53) in der Weise verbunden ist, dass der genannte Behälter unter einen Ausgleichsdruck (P_{G}) gesetzt werden kann, **dadurch gekennzeichnet, dass** der genannte differentielle Druckregler (54) außerdem einen Steuereinlass (78) aufweist, der dazu bestimmt ist, mit der genannten Leitung. (15) in der Weise verbunden zu werden, dass er den Ausgleichsdruck (P_{G}) des genannten Behälters in Abhängigkeit vom Druck der Flüssigkeit in der Leitung modifizieren kann.

2. Vorrichtung nach anspruch 1, bei der der Regler (54) so ausgebildet ist, dass der Ausgleichsdruck (P_{G}) im wesentlichen gleich dem Steuerdruck (P_{P}) am Steuereinlass (78) ist oder gleich einem Solldruck (P_{C}), der gleich dem durch einen Differenzdruck (δ) modifizierten Steuerdruck (P_{P}) ist.

3. Vorrichtung nach einem der vorstehenden Ansprüche, bei der der Regler ein mechanischer Regler ist, der ohne Mitwirkung eines elektrischen oder elektronischen Organs arbeitet.

4. Vorrichtung nach einem der vorstehenden Ansprüche, mit, am Punkt der Injektion in die Leitung (15), einem Einspritzsystem (22), das erste (96) und zweite Blenden (100) aufweist, die den Durchlassquerschnitt für die Flüssigkeit bzw. das genannte Additiv verringern.

5. Vorrichtung nach einem der Ansprüche 2 bis 4, bei der der Regler Mittel zur Einstellung des Ausgleichsdruckes (P_{G}) ist, dass die Differenz zwischen dem Steuerdruck oder dem Solldruck und einem stromaufwärts des Punktes der Injektion in die Leitung (15) gemessenen des Additivs gegen null tendiert.

6. Vorrichtung nach der vorstehenden Ansprüche, bei der der Behälter (53) ein Additiv enthält, das ausgewählt ist aus der Gruppe bestehend aus einem Emulgator, einem Produkt zur Behandlung von Abwasser, einem Produkt zur Behandlung von Badewasser und einem Pflanzenschutzmittel,

7. Vorrichtung zur Bereitstellung einer Flüssigkeit, die ein Additiv enthält, mit
- einer Leitung (15), die an eine Quelle (14) für die genannte Flüssigkeit angeschlossen ist, und
- einer Vorrichtung zur Bevorratung und Dosierung nach einem der vorstehenden Ansprüche, die ein in die genannte Leitung eingefügtes Einspritzsystem (22) aufweist und bei welcher der Steuereinlass des Reglers mit der genannten Leitung (15) verbunden ist.

8. Vorrichtung nach dem vorstehenden Anspruch, mit einer Quelle für ein unter Druck stehendes Druckausgleichsfluid (71), die mit dem Einlass (70) für das Druckausgleichsfluid des genannten Reglers verbunden ist, wobei das Druckausgleichsfluid ein gasförmiges oder inkompressibles Fluid ist.

9. Vorrichtung nach dem vorstehenden Anspruch, bei der die Quelle für das Druckausgleichsfluid ausgewählt ist aus einem Druckgasnetz, einer Druckflasche, einem Kompressor.

10. Vorrichtung nach der Ansprüche 7 bis 9, bei der die Leitung eine Leitung eines Systems zum und zur Brandbekämpfung ist, das wenigstens einen Sprinkler (12) aufweist.

11. Vorrichtung nach der vorstehenden ansprüche 7 bis 10, bei der der Steuereinlass stromaufwärts des Punktes der injektion des Additivs in die Leitung (15) angeschlossen ist.

12. Verfahren zur Einstellung der Konzentration eines Additivs (E) in einer Flüssigkeit, die mit variablem Durchsatz in in einer Leitung (15) zirkuliert, wobei dieses Verfahren eine Injektion, an einem Einspritzpunkt in die genannte Leitung, des genannten Additivs mit einem Durchsatz, der als Funktion der Differenz der Drücke der Flüssigkeit (P_{w}) und des Additivs (P_{E}) variabel ist, stromaufwärts des Injektionspunktes einschließt, **dadurch gekennzeichnet, dass** der genannte Druck des Additivs modifiziert wird, indem der Druck (P_{G}) eines Druckausgleichsfluids für einen Behälter (53) modifiziert wird, der das genannte Additiv (E) enthält und mit mit genannten Injektionspunkt (22) in Fluidverbindung steht.

13. Verfahren nach dem vorstehenden Anspruch, bei dem der Druck des Druckausgleichsfluides, als "Ausgleichsdruck" bezeichnet, bestimmt wird als Funktion
- eines Druckes der genannten Flüssigkeit in der Leitung und/oder
- eines Differenzdruckes und/oder
- eines Druckes des Additivs stromaufwärts des Injektionspunktes.

14. Verfahren zur Nachrüstung einer -Einheit zur Bevorratung und Dosierung, die zur Injektion eines Additivs in eine Leitung (15) bestimmt ist, die von einer Flüssigkeit durchströmt wird, welche Einheit aufweist:
- einen Behälter (24), dessen einer Einlass mit der genannten Leitung in Fluidverbindung gebraucht werden
- eine weiche Tasche (26), die dazu bestimmt ist, das genannte Additiv aufzunehmen, und die so im Inneren des Behälters angeordnet ist, dass sie einem Druck ausgesetzt ist, der von der genannten Flüssigkeit ausgeübt wird, wenn der genannte Einlass des Behälters mit der genannten Leitung in Verbindung steht, und deren einer Auslass mit der genannten Leitung in Fluidverbindung gebracht werden kann, insbesondere über ein in diese Leitung eingefügtes Injektionssystem (22),
welches Verfahren die folgenden Schritte aufweist:
a) Lösen und Entnehmen der Tasche (26) aus dem Behälter (24),
b) Modifizieren des Einlasses (der Einlässe) und des Auslasses (der Auslässe) des Behälters und Installieren eines differentiellen Druckreglers und ggf. einer Druckquelle in der Weise, dass eine Vorrichtung zur Bevorratung und Dosierung nach einem der Ansprüche 1 bis 6 oder eine Bereitstellungsvorrichtung nach einem der Ansprüche 7 bis 13 gebildet wird.
